# EUROPÄISCHE PATENTSCHRIFT

(11) **EP 3 943 371 B1**
(45) Veröffentlichungstag und Bekanntmachung des Hinweises auf die Patenterteilung: **07.09.2022**
(21) Anmeldenummer: 21183909.7
(22) Anmeldetag: 06.07.2021
(51) Int. Cl.: B62D 35/00, B62D 37/02, B60R 13/04

(54) **VERKLEIDUNGSANORDNUNG ZUR VERKLEIDUNG EINES KAROSSERIEELEMENTS FÜR EIN KRAFTFAHRZEUG, SOWIE EIN VERFAHREN ZUR ZWANGSGESTEUERTEN VERLAGERUNG EINER LUFTLEITVORRICHTUNG EINER VERKLEIDUNGSANORDNUNG**
CLADDING ARRANGEMENT FOR CLADDING A BODY ELEMENT FOR A MOTOR VEHICLE, AND METHOD FOR POSITIVELY CONTROLLED DISPLACEMENT OF AN AIR GUIDING DEVICE OF A CLADDING ARRANGEMENT
DISPOSITIF D'HABILLAGE PERMETTANT D'HABILLER UN ÉLÉMENT DE CARROSSERIE POUR UN VÉHICULE AUTOMOBILE, AINSI QUE PROCÉDÉ DE DÉPLACEMENT À COMMANDE FORCÉE D'UN DISPOSITIF D'ACHEMINEMENT D'AIR D'UN DISPOSITIF D'HABILLAGE

(30) Priorität: 21.07.2020 DE 102020209130
(43) Veröffentlichungstag der Anmeldung: 26.01.2022
(73) Patentinhaber: Magna Exteriors GmbH, 63877 Sailauf (DE)
(72) Erfinder: KNAUER, Bernd, 70199 Stuttgart (DE)
(74) Vertreter: Völger, Silke Beatrix

(56) Entgegenhaltungen:
- DE-U1-202011 005 504
- FR-A1- 2 983 451
- US-A1- 2019 161 123

## Beschreibung

Die vorliegende Erfindung betrifft eine Verkleidungsanordnung zur Verkleidung eines Karosserieelements für ein Kraftfahrzeug, sowie ein Verfahren zur zwangsgesteuerten Verlagerung einer Luftleitvorrichtung einer Verkleidungsanordnung.

Der Längsträger (Schweller) ist ein Bereich der selbsttragenden Karosserie eines Kraftfahrzeugs und befindet sich beidseits längs unterhalb des zwischen den Radkästen vorn und hinten.

Kraftfahrzeuge umfassen im Bereich des Längsträgers und Bodenbereich Verkleidungselemente, die zur Verbesserung der Aerodynamik, des Erscheinungsbildes oder des Schutzes des Blechaufbaus vorgesehen sind.

Eine Vielzahl von Kraftfahrzeugen sind im unterseitigen Seitenbereich lediglich mit einem fest installierten Fahrzeugschweller versehen, welcher nach aerodynamischen und optischen Gesichtspunkten sowie gesetzlichen Vorgaben ausgelegt ist. Aufgrund der Vorgaben, die in die Gestaltung des Fahrzeugschwellers einfließen, müssen aus aerodynamischer Sicht Kompromisse eingegangen werden. Insbesondere die Bodenfreiheit findet bei der Auslegung des Fahrzeugschwellers Beachtung, wobei diese in der Regel für niedrige Geschwindigkeiten ausgelegt wird.

Für höhere Geschwindigkeiten ergibt sich hierdurch eine nicht optimale aerodynamische Luftströmung unter dem Fahrzeug.

Aus der DE 36 13 301 A1 ist ein Personenkraftwagen mit einer Seitenverkleidung im Bereich eines Seitenschwellers bekannt. Die Seitenverkleidung ist über Stellelemente fahrgeschwindigkeitsabhängig ein- und ausfahrbar. Bei höheren Fahrgeschwindigkeiten verbessert die Seitenverkleidung in der ausgefahrenen Stellung die Aerodynamik des Kraftfahrzeugs. In der eingefahrenen Stellung bei stehendem Kraftfahrzeug wird hingegen die Optik des Fahrzeugs nicht beeinträchtigt.

Ein Kraftfahrzeug mit einer Luftleitvorrichtung ist auch aus der DE 20 2011 005 504 U1 bekannt. Die Luftleitvorrichtung ist dabei an der karosseriefesten Basis angeordnet und umfasst ein in Fahrzeuglängsrichtung sich erstreckendes Leitelement. Dieses Leitelement ist mittels einer Betätigungsmechanik zwischen einer eingefahrenen Ruhestellung und einer ausgestellten Betriebsstellung verlagerbar.

Aus der DE 10 2019 128 309 B3 ist eine Antriebsvorrichtung für ein verstellbares Luftleitelement eines Kraftfahrzeugs bekannt. Das Luftleitelement kann dabei zwischen einer ausgefahrenen Stellung und einer eingefahrenen Stellung verstellt werden. Hierbei kann auch der Anstellwinkel des Luftleitelements verändert werden.

Weiterhin ist aus der US 2019 / 0 161 123 A1 ein Kraftfahrzeug mit verschwenkbar im Bereich der Seitenschweller angeordneten Seitenverkleidungen bekannt. Die Seitenverkleidungen sind zweigeteilt ausgeführt und können verlängert werden.

Aus der US 9 975 490 B1 ist ein Kraftfahrzeug mit seitlichen Trittstufen, Halterungen mit einer Grundplatte und einer Plattenplatte und einem Betätigungsmechanismus mit einem ersten Verbindungsglied, einem zweiten Verbindungsglied und einem Aktuator bekannt. Die seitlichen Trittstufen können geschwindigkeitsabhängig in mindestens eine von einer Trittbrettposition, einer aerodynamischen Position und einer Stauposition bewegt werden.

Die US 8 702 152 B1 offenbart eine ausfahrbare Luftklappenanordnung für ein Kraftfahrzeug. Die Luftklappenbaugruppe umfasst eine Luftabweiserplatte, die so angepasst ist, dass sie neben einem vorderen Stoßfänger eines Fahrzeugs montiert werden kann und mittels eines linearen Aktuators zwischen einer verstauten Position, in der die Luftabweiserplatte zumindest teilweise von der vorderen Stoßstange verdeckt wird, und einer ausgefahrenen Position verschoben werden kann.

Aus dem Dokument US 4 582 351 A sind hydraulisch anhebbare und absenkbare vordere und hintere Stoßfänger bekannt. Die Stoßfänger können in der eingestellten Position verriegelt werden.

Aufgabe der Erfindung ist es, ein Kraftfahrzeug mit einer Verkleidungsanordnung im Bereich des Längsträgers zu schaffen, wobei diese verstellbar ist und sowohl bei niedrigen Geschwindigkeiten als auch bei höheren Geschwindigkeiten eine optimale Aerodynamik des umströmten Kraftfahrzeugs ermöglicht.

Diese Aufgabe löst die vorliegende Erfindung durch einen mit den in Patentanspruch 1 angegebenen Merkmalen.

Die Verkleidungsanordnung umfasst dabei eine zweiteilig ausgeführte Luftleitvorrichtung, die zwischen einer eingefahrenen ersten Funktionsstellung und einer komplett ausgefahrenen zweiten Funktionsstellung verstellbar ausgeführt ist.

Durch die zuvor genannte Verstellbarkeit der Luftleitvorrichtung kann die aerodynamische Funktion des Kraftfahrzeugs bei höheren Geschwindigkeiten verbessert werden, ohne die Bodenfreiheit und die Funktion des Kraftfahrzeugs bei geringen Geschwindigkeiten zu beeinträchtigen.

Aufgrund der zweiteiligen Ausführung der Luftleitvorrichtung und die Verwendung eines primären und sekundären Hebeltriebs kann eine maximale Ausfahrtiefe in z-Richtung in der ausgefahrenen zweiten Funktionsstellung erreicht werden. Gleichzeitig wird in der eingefahrenen ersten Funktionsstellung ein minimaler Bauraum in y- Richtung benötigt.

Durch die Verwendung einer Achse kann die Kraft eines Aktuators zuverlässig an die entsprechenden Hebelgelenke des sekundären und primären Hebeltriebs übertragen werden. Des Weiteren ist eine Abstimmung der Position des Antriebs auf die Gegebenheiten des Kraftfahrzeugs hinsichtlich des Bauraums möglich.

Diese Verstellung erfolgt über eine Kinematikanordnung die einen primären und sekundären Hebeltrieb umfasst.

Vorteilhafte Ausgestaltungen der vorliegenden Erfindung sind in den Unteransprüchen angegeben.

Die x, y und z Richtung bezieht sich im Folgenden auf ein übliches Fahrzeugkoordinatensystem, wobei die x-Richtung die Längsrichtung die y-Richtung die Querrichtung und die z-Richtung die Hochrichtung eines Fahrzeugs bezeichnet.

Die Erfindung wird nachfolgend anhand in den Zeichnungen schematisch dargestellter Ausführungsbeispiele beschrieben.

Es zeigt:
Fig. 1 eine perspektivische Ansicht auf einen Längsträger im Bereich eines Türausschnitts im Rohbau mit einer verstellbaren Verkleidungsanordnung in einer vollständig ausgestellten Betriebsstellung,
Fig. 2 eine perspektivische Ansicht auf den Längsträger im Bereich des Türausschnitts im Rohbau mit der verstellbaren Verkleidungsanordnung in einer vollständig eingefahrenen Betriebsstellung,

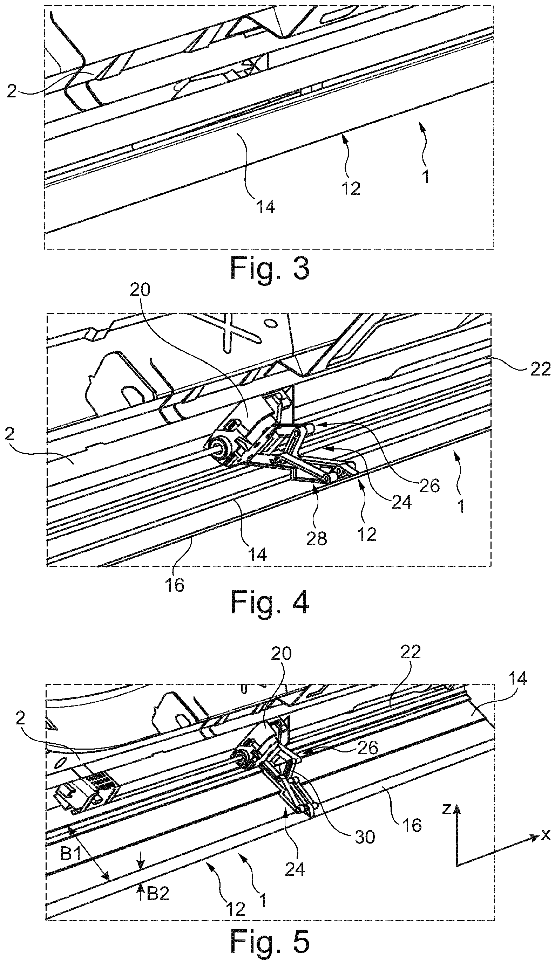

Fig. 3 eine perspektivische Ansicht mit Blick von der Fahrzeugunterseite nach außen hin gerichtet auf die Verkleidungsanordnung in der vollständig eingefahrenen Betriebsstellung,
Fig. 4 eine perspektivische Ansicht mit Blick von der Fahrzeugunterseite nach außen hin gerichtet auf die Verkleidungsanordnung in einer teilweise ausgefahrenen Betriebsstellung mit Verstelleinrichtung,
Fig. 5 eine perspektivische Ansicht mit Blick von der Fahrzeugunterseite nach außen hin gerichtet auf die Verkleidungsanordnung in der vollständig ausgestellten Betriebsstellung mit Verstelleinrichtung,
Fig. 6 einen Schnitt durch den Längsträger mit verstellbarer Verkleidungsanordnung mit einer Ansicht auf die Verstelleinrichtung in der vollständig eingefahrenen Betriebsstellung;
Fig. 7 einen Schnitt durch den Längsträger mit verstellbarer Verkleidungsanordnung mit einer Ansicht auf die Verstelleinrichtung in einer teilweise ausgestellten Betriebsstellung;

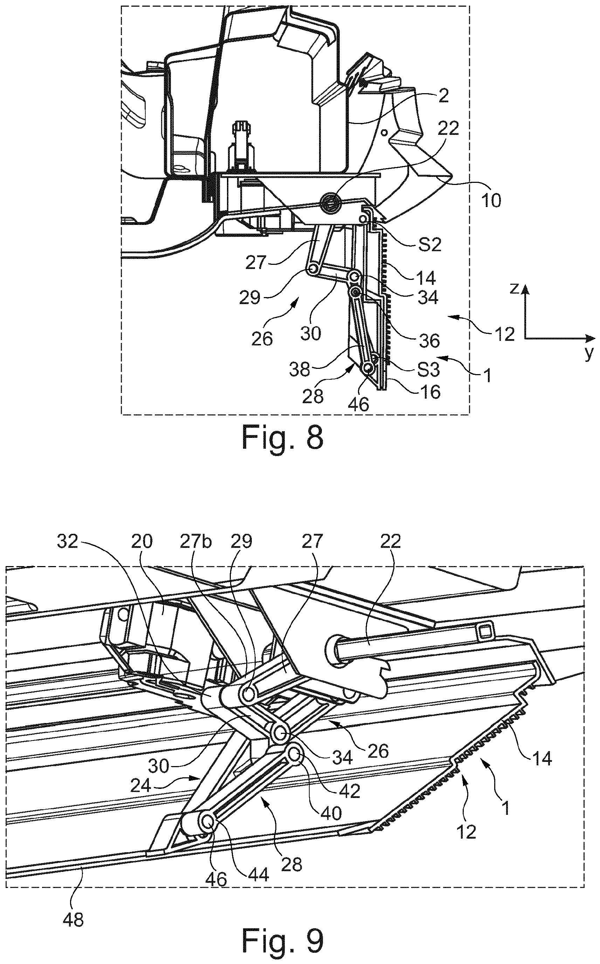

Fig. 8 einen Schnitt durch den Längsträger mit verstellbarer Verkleidungsanordnung mit einer Ansicht auf die Verstelleinrichtung in der vollständig ausgestellten Betriebsstellung; und
Fig. 9 eine perspektivische Ansicht von der Fahrzeugunterseite nach außen hin gerichtet auf die verstellbare Verkleidungsanordnung in einer ausgestellten Betriebsstellung.

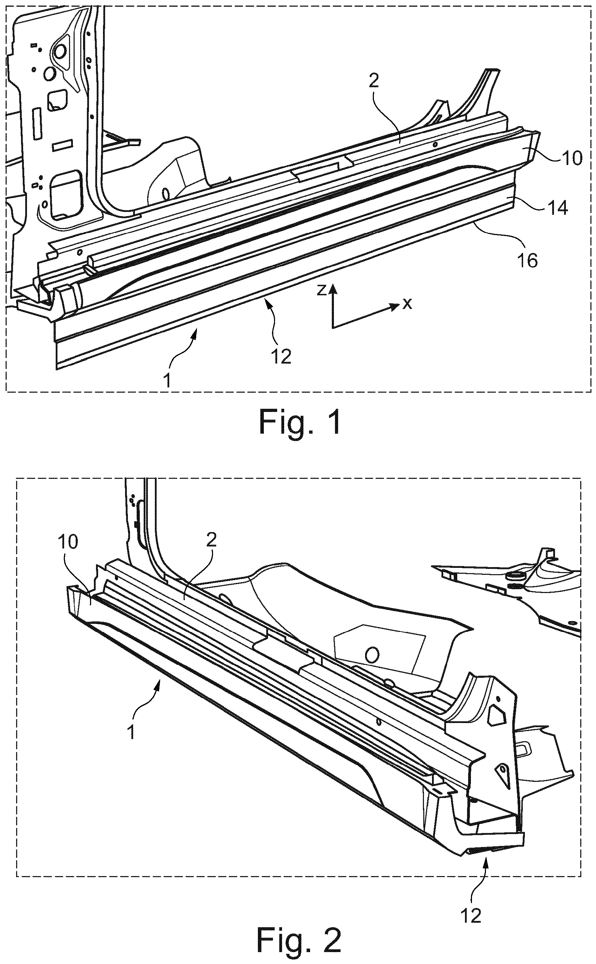

Figur 1 zeigt eine Ansicht auf einen Längsträger/Seitenschweller 2 im Bereich eines Türausschnitts 3 im Rohbau mit einer verstellbaren Verkleidungsanordnung 1 in einer vollständig ausgestellten Funktionsstellung. Die Verkleidungsanordnung 1 ist hierbei als äußere Seitenschwellerverkleidung (Längsträgerverkleidung) ausgeführt, die zum Schutz von Beschädigungen und Beschmutzungen die Unterkante des Türausschnitts überdeckt.

Hierfür umfasst die Verkleidungsanordnung 1 ein erstes in Längsrichtung verlaufendes Verkleidungselement 10, vorzugsweise aus einem formsteifen Kunststoffmaterial, welches den rohbauseitigen Längsträger 2 zwischen dem Vorderrad und dem Hinterrad nach außen (z-Richtung) und nach unten (y-Richtung) hin abdeckt.

Die Verkleidungsanordnung 1 umfasst dabei eine zweiteilig ausgeführte Luftleitvorrichtung 12, die zwischen einer eingefahrenen ersten Funktionsstellung und einer komplett ausgefahrenen zweiten Funktionsstellung verstellbar ausgeführt ist. Die zweiteilig ausgebildete Luftleitvorrichtung 12 weist dabei ein erstes Verkleidungsteil 14 und ein zweites Verkleidungsteil 16 auf. Das erste Verkleidungsteil 14 ist ein streifenförmiges Klappenelement welches sich in Längsrichtung erstreckt und im Bereich der unteren Vorderkante des ersten Verkleidungselements 10 um eine Längsachse karosserieseitig verschwenkbar angebunden ist. Die Schwenkachse ist mit S2 bezeichnet. Das zweite Verkleidungteil 16 ist ebenfalls als streifenförmiges Klappenelement ausgebildet, wobei die Breite B2 des Verkleidungsteils im Verhältnis zur Breite B1 des Verkleidungsteils 14 um ein Vielfaches geringer ist.

Das zweite Verkleidungsteil 16 erstreckt sich ebenfalls in Längsrichtung, unmittelbar an der vom Verkleidungselement 10 abgewandten Längsseite 15 des Verkleidungsteils 14 und ist dort ebenfalls um eine Längsachse verschwenkbar angebunden. Die Schwenkachse ist mit S3 bezeichnet.

Die komplett eingefahrene Funktionsstellung ist in der Figur 2 dargestellt. In dieser Funktionsstellung wird die maximale Bodenfreiheit, d.h. der maximale Abstand zwischen Unterseite Verkleidungsanordnung und Bodenoberfläche erreicht. In der in Figur 1 gezeigten zweiten Funktionsstellung verläuft die Luftleitvorrichtung 12 im Wesentlichen komplett in z-Richtung zum Boden hin ausgestellt. In dieser zweiten Funktionsstellung wird die minimale Bodenfreiheit erreicht.

Es ist selbstverständlich, dass auch jede beliebige Zwischenstellung eingestellt werden kann.

Um diese in den Figuren gezeigte Verlagerung des ersten und zweiten Verkleidungsteils 14, 16 zu bewirken ist eine Verstelleinrichtung vorgesehen. Die Verstelleinrichtung umfasst einen Aktuator 20 der karosserieseitig an der Unterseite im Bereich des Längsträgers angebunden ist und der über eine in Längsrichtung verlaufende Achse 22 und eine Vielzahl in Längsrichtung positionierter Kinematikanordnungen 24 die Verlagerung der Verkleidungsteile 14, 16 in die Funktionsstellungen bewirken kann.

Die Achse 22 ist dabei an in z- Richtung weisenden Tragelementen 24 gelagert, die parallel beabstandet in x-Richtung an der zum Boden hin weisenden Seite des Längsträgers befestigt sind. Der Aktuator 20 greift dabei direkt oder indirekt an der Achse 22 an und leitet bei entsprechender Ansteuerung eine Drehbewegung der Achse 22 ein.

Die Kinematikanordnung 24 umfasst einen primären und sekundären Hebeltrieb 26, 28.

Die Vestellbewegung wird über den primären Hebeltrieb 26 auf das erste Verkleidungsteil 14 übertragen. Hierfür weist der primäre Hebeltrieb 26 einen ersten Hebel 27 und eine Schwinge 30 auf. Der erste Hebel 27 ist mittels seines ersten Endbereichs 27a an der Achse 22 drehfest gelagert. Der zweite Endbereich 27b des Hebels 27 ist über ein erstes Drehgelenk 29 an einem ersten Endbereich 32 der Schwinge 30 angebunden. Die Schwinge 30 weist in einem mittleren Bereich eine gelenkige Anbindung an das erste Verkleidungsteil 14 auf. Zwischen Schwinge 30 und Verkleidungsteil 14 ist hierfür auf der nach innen weisenden Fläche ein zweites Drehgelenk 34 vorgesehen.

Das zweite Verkleidungsteil 16 wird über eine Anbindung mittels des sekundären Hebeltriebs 28 an einem zweiten Endbereich 36 der Schwinge 30 angelenkt. Der sekundäre Hebeltrieb 28 weist hierfür einen zweiten Hebel 38 auf, der an seinem ersten Endbereich 40 über ein drittes Drehgelenk 42 an dem zweiten Endbereich 36 der Schwinge angebunden ist. Mittels seines zweiten Endbereichs 44 ist der zweite Hebel 38 über ein viertes Drehgelenk 46 an dem zweiten Verkleidungsteil 16 angebunden. Wie es aus den Zeichnungen zu erkennen ist, ist das zweite Drehgelenk auf der nach innen weisenden Fläche des Verkleidungsteils 16 im Bereich seiner Unterkante 48 angeordnet.

Die zuvor beschriebene Kinematikanordung ist eine Siebengelenk-Kinematikanordnung.

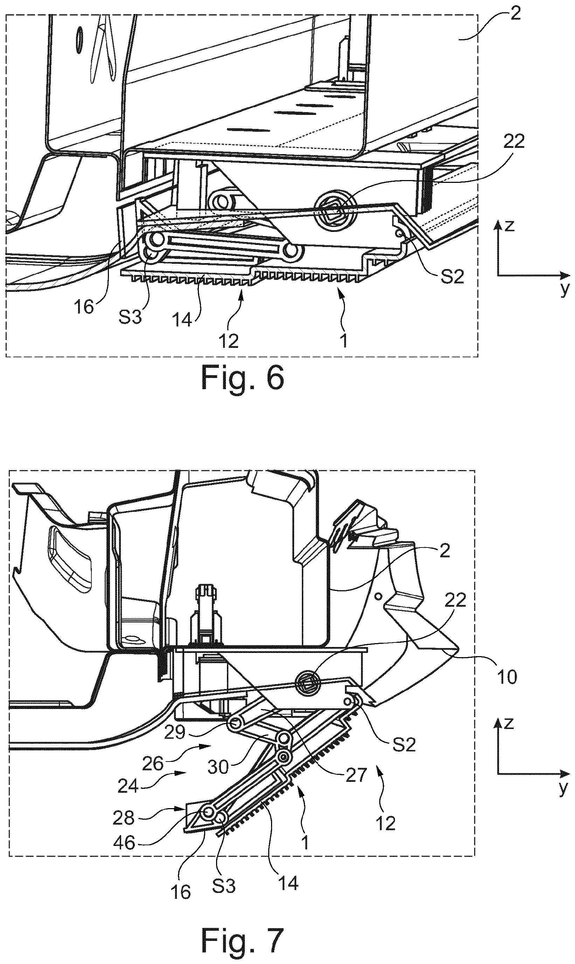

Wie es insbesondere gut erkennbar aus der Schnittdarstellung der Figur 6 zu erkennen ist, liegt in der ersten Funktionsstellung das erste Verkleidungsteil 14 parallel zur Unterseite des Längsträgers 2. Das zweite Verkleidungsteil 16 ist dabei ausgehend von der Unterkante des ersten Verkleidungsteils 14 um die Schwenkachse S3 in eine in etwa senkrecht in z-Richtung nach oben gestellte Position verschwenkt. Hierdurch kann in y-Richtung gesehen eine bauraumoptimierte Anordnung der Verkleidungsanordnung 1 erreicht werden.

Bei der zwangsgesteuerten Verlagerung der zweiteilig ausgeführten Luftleitvorrichtung 12 wird zunächst über den primären Hebeltrieb 26 das erste Verkleidungsteil 14 nach außen und unten verschwenkt. Bei dieser Verstellbewegung wird gleichzeitig über den sekundären Hebeltrieb 28 eine Verdrehung des zweiten Verkleidungsteils 16 um die Schwenkachse S3 bewirkt, so dass diese ausgehend von der in z- Richtung nach oben weisenden Stellung in eine in z- Richtung nach unten weisende Stellung verdreht wird.

### Bezugszeichenliste

- 1: Verkleidungsanordnung
- 2: Längsträger/Seitenschweller
- 3: Türausschnitt
- 10: Verkleidungselement
- 12: Luftleitvorrichtung
- 14: erstes Verkleidungsteil
- 15: Längsseite
- 16: zweites Verkleidungsteil
- 20: Aktuator
- 22: Achse
- 24: Kinematikanordnung
- 26: Primärer Hebeltrieb
- 27: erster Hebel
- 27a: erster Endbereich
- 27b: zweiter Endbereich
- 28: sekundärer Hebeltrieb
- 29: Drehgelenk
- 30: Schwinge
- 32: erster Endbereich Schwinge
- 34: zweites Drehgelenk
- 36: zweiter Endbereich Schwinge
- 38: zweiter Hebel
- 40: erster Endbereich Hebel
- 42: drittes Drehgelenk
- 44: zweiter Endbereich Hebel
- 46: viertes Drehgelenk
- 48: Unterkante Verkleidungsteil

## Patentansprüche

1. Verkleidungsanordnung (1) zur Verkleidung eines Karosserieelements eines Fahrzeugs, mit einer schwenkbar gelagerten Luftleitvorrichtung (12) die mittels einer Kinematikanordnung (24) in eine eingefahrene erste Funktionsstellung und in eine komplett ausgefahrene zweite Funktionsstellung verlagerbar ist und vice versa, wobei die Luftleitvorrichtung (12) zweiteilig ausgeführt ist und ein erstes und ein zweites verstellbar zueinander verbundenes Verkleidungsteil (14, 16) umfasst, und wobei die Kinematikanordnung aus einem primären und einem sekundären Hebeltrieb (26, 28) gebildet wird, und wobei ein Aktuator (20) karosserieseitig im Bereich des Längsträgers angebunden ist, wobei der Aktuator (20) an einer in Längsrichtung verlaufenden Achse (22) angreift und zur Einleitung einer Drehbewegung angreift, und dass diese Vestellbewegung über den primären Hebeltrieb (26) auf das erste Verkleidungsteil (14) übertragen wird, **dadurch gekennzeichnet, dass** das erste und zweite Verkleidungsteil (14, 16) verschwenkbar miteinander verbunden sind, und dass der primäre Hebeltrieb (26) einen ersten Hebel (27) und eine Schwinge (30) aufweist, wobei der erste Hebel (27) mittels seines ersten Endbereichs (27a) an der Achse (22) drehfest gelagert ist, und der zweite Endbereich (27b) des Hebels (27) über ein erstes Drehgelenk (29) an einem ersten Endbereich (32) der Schwinge (30) angebunden ist, und wobei die Schwinge (30) in einem mittleren Bereich eine gelenkige Anbindung an das erste Verkleidungsteil (14) umfasst, und dass das zweite Verkleidungsteil (16) über eine Anbindung mittels des sekundären Hebeltriebs (28) an dem primären Hebeltrieb (26) angelenkt wird.

2. Verkleidungsanordnung (1) nach Anspruch 1, **dadurch gekennzeichnet, dass** das Karosserieelement ein in Längsrichtung verlaufender Seitenschweller/Längsträger (2) ist.

3. Verkleidungsanordnung (1) nach Anspruch 2, **dadurch gekennzeichnet, dass** die Verkleidungsanordnung (1) ein erstes in Längsrichtung verlaufendes Verkleidungselement (10), vorzugsweise aus einem formsteifen Kunststoffmaterial umfasst, welches den Längsträger (2) zwischen einem Vorderrad und einem Hinterrad nach außen (z-Richtung) und nach unten (y-Richtung) hin abdeckt.

4. Verkleidungsanordnung (1) nach einem der vorangehenden Ansprüche, **dadurch gekennzeichnet, dass** das erste Verkleidungsteil (14) ein streifenförmiges Klappenelement ist, welches sich in Längsrichtung erstreckt und im Bereich einer unteren Vorderkante des ersten Verkleidungselements (10) um eine Längsachse karosserieseitig verschwenkbar angebunden ist, und dass das zweite Verkleidungsteil (16) ein streifenförmiges Klappenelement ist, welches sich in Längsrichtung erstreckt und unmittelbar an der vom Verkleidungselement (10) abgewandten Längsseite (15) des Verkleidungsteils (14) um eine Längsachse verschwenkbar angebunden ist.

5. Verkleidungsanordnung (1) nach Anspruch 4, **dadurch gekennzeichnet, dass** die Breite B2 des zweiten Verkleidungsteils (16) im Verhältnis zur Breite B1 des ersten Verkleidungsteils (14) um ein Vielfaches geringer ist.

6. Verkleidungsanordnung (1) nach einem der vorangehenden Ansprüche, **dadurch gekennzeichnet, dass** in der ersten Funktionsstellung das erste Verkleidungsteil (14) parallel zur Unterseite des Längsträgers (2) verläuft, und das zweite Verkleidungsteil (16) ausgehend von der Unterkante des ersten Verkleidungsteils (14) in eine in etwa senkrecht in z-Richtung nach oben gestellte Position verschwenkt gehalten ist.

7. Verkleidungsanordnung (1) nach Anspruch 1, **dadurch gekennzeichnet, dass** der sekundäre Hebeltrieb (28) einen zweiten Hebel (38) umfasst, wobei dieser an seinem ersten Endbereich (40) über ein drittes Drehgelenk (42) an dem zweiten Endbereich (36) der Schwinge (30) angebunden ist und mittels seines zweiten Endbereichs (44) über ein viertes Drehgelenk (46) an dem zweiten Verkleidungsteil 16 angebunden ist.

8. Verfahren zur zwangsgesteuerten Verlagerung einer Luftleitvorrichtung (12) nach einem der Ansprüche 1 bis 7, **dadurch gekennzeichnet, dass** bei einer Verstellbewegung von der ersten Funktionsstellung in die zweite Funktionsstellung mittels des primären Hebeltriebs (26) das erste Verkleidungsteil (14) nach außen und unten verschwenkt wird und bei dieser Verstellbewegung gleichzeitig über den sekundären Hebeltrieb (28) eine Verdrehung des zweiten Verkleidungsteils (16) um eine Schwenkachse S3 derart bewirkt wird, dass das zweite Verkleidungsteil ausgehend von der in z- Richtung nach oben weisenden Stellung in eine in z- Richtung nach unten weisende Stellung ausgerichtet ist.

## Claims

1. Cladding arrangement (1) for cladding a body element for a motor vehicle, with a pivotably mounted air guide device (12) which can be moved by means of a kinematic arrangement (24) into a retracted first function position and into a fully extended second function position and vice versa, wherein the air guide device (12) is configured in two parts and has a first and a second cladding part (14, 16) which are connected together so as to be adjustable relative to one another, and wherein the kinematic arrangement is formed by a primary and a secondary lever drive (26, 28), and wherein an actuator (20) is attached to the body in the region of the side member, wherein the actuator (20) acts on a shaft (22) running in the longitudinal direction and acts to initiate a rotary movement, and this adjustment movement is transmitted via the primary lever drive (26) to the first cladding part (14), **characterized in that** the first and second cladding parts (14, 16) are pivotably connected together, and that the primary lever drive (26) comprises a first lever (27) and a rocker (30), wherein the first lever (27) is mounted rotationally fixedly on the shaft (22) by means of its first end region (27a), and the second end region (27b) of the lever (27) is attached via a first pivot joint (29) to a first end region (32) of the rocker (30), and wherein in a middle region, the rocker (30) comprises an articulated connection to the first cladding part (14), and the second cladding part (16) is hinged to the primary lever drive (26) via a connection by means of the secondary lever drive (28).

2. Cladding arrangement (1) according to claim 1, **characterized in that** the body element is a sill/side member (2) running in the longitudinal direction.

3. Cladding arrangement (1) according to claim 2, **characterized in that** the cladding arrangement (1) comprises a first cladding element (10) running in the longitudinal direction, which is preferably made of a form-rigid plastic material and covers the side member (2) between a front wheel and a rear wheel towards the outside (Z direction) and downward (Y direction).

4. Cladding arrangement (1) according to any of the preceding claims, **characterized in that** the first cladding part (14) is a strip-like flap element which extends in the longitudinal direction and is connected to the body in the region of a lower front edge of the first cladding element (10) so as to be pivotable about a longitudinal axis, and that the second cladding part (16) is a strip-like flap element which extends in the longitudinal direction and is attached directly to the long side (15) of the cladding part (14) facing away from the cladding element (10) so as to be pivotable about a longitudinal axis.

5. Cladding arrangement (1) according to claim 4, **characterized in that** the width B2 of the second cladding part (16) is many times smaller than the width B1 of the first cladding part (14).

6. Cladding arrangement (1) according to any of the preceding claims, **characterized in that** in the first function position, the first cladding part (14) runs parallel to the underside of the side member (2), and the second cladding part (16) is held, starting from the lower edge of the first cladding part (14), pivoted in a position pointing approximately vertically upward in the Z direction.

7. Cladding arrangement (1) according to claim 1, **characterized in that** the secondary lever drive (28) comprises a second lever (38), which at its first end region (40) is attached via a third pivot joint (42) to the second end region (36) of the rocker (30), and at its second end region (44) is attached via a fourth pivot joint (46) to the second cladding part (16).

8. Method for positively controlled displacement of an air guiding device (12) according to any of claims 1 to 7, **characterized in that** during an adjustment movement from the first function position to the second function position, by means of the primary lever drive (26), the first cladding part (14) is pivoted outward and downward, and during this adjustment movement, at the same time via the secondary lever drive (28), a twist of the second cladding part (16) is provoked about a pivot axis S3 such that the second cladding part, starting from the position pointing upward in the Z direction, is oriented into a position pointing downward in the Z direction.

## Revendications

1. Dispositif d'habillage (1) permettant d'habiller un élément de carrosserie d'un véhicule, comprenant un dispositif d'acheminement d'air (12) monté de manière pivotante qui peut être déplacé au moyen d'un agencement cinématique (24) dans une première position fonctionnelle rétractée et dans une deuxième position fonctionnelle complètement déployée et vice versa, le dispositif d'acheminement d'air (12) étant réalisé en deux parties et comprenant une première et une deuxième partie d'habillage (14, 16) reliées l'une à l'autre de manière réglable, et l'agencement cinématique étant formé d'une commande à levier primaire et d'une commande à levier secondaire (26, 28), et un actionneur (20) étant relié du côté de la carrosserie dans la zone du longeron, l'actionneur (20) agissant sur un axe (22) s'étendant dans la direction longitudinale et agissant pour induire un mouvement de rotation, et en ce que ce mouvement de réglage est transmis à la première pièce d'habillage (14) par l'intermédiaire de la commande à levier primaire (26), **caractérisé en ce que** la première et la deuxième partie d'habillage (14, 16) sont reliées l'une à l'autre de manière pivotante, et **en ce que** la commande à levier primaire (26) présente un premier levier (27) et un bras oscillant (30), le premier levier (27) étant monté de manière immobile en rotation sur l'axe (22) au moyen de sa première zone d'extrémité (27a), et la deuxième zone d'extrémité (27b) du levier (27) étant reliée à une première zone d'extrémité (32) du bras oscillant (30) par l'intermédiaire d'une première articulation tournante (29), et le bras oscillant (30) comprenant une liaison articulée avec la première partie d'habillage (14) dans une zone centrale, et **en ce que** la deuxième partie d'habillage (16) est articulée avec la commande à levier primaire (26) par l'intermédiaire d'une liaison au moyen de la commande à levier secondaire (28).

2. Dispositif d'habillage (1) selon la revendication 1, **caractérisé en ce que** l'élément de carrosserie est un seuil latéral/longeron (2) s'étendant dans la direction longitudinale.

3. Dispositif d'habillage (1) selon la revendication 2, **caractérisé en ce que** le dispositif d'habillage (1) comprend un premier élément d'habillage (10) s'étendant dans la direction longitudinale, de préférence en une matière plastique rigide, qui recouvre le longeron (2) entre une roue avant et une roue arrière vers l'extérieur (direction z) et vers le bas (direction y).

4. Dispositif d'habillage (1) selon l'une quelconque des revendications précédentes, **caractérisé en ce que** la première partie d'habillage (14) est un élément de volet en forme de bande qui s'étend dans la direction longitudinale et qui est relié de manière pivotante autour d'un axe longitudinal du côté de la carrosserie dans la zone d'un bord avant inférieur du premier élément d'habillage (10), et **en ce que** la deuxième partie d'habillage (16) est un élément de volet en forme de bande qui s'étend dans la direction longitudinale et qui est relié directement au côté longitudinal (15) de la partie d'habillage (14) détourné de l'élément d'habillage (10) de manière pivotante autour d'un axe longitudinal.

5. Ensemble d'habillage (1) selon la revendication 4, **caractérisé en ce que** la largeur B2 de la deuxième partie d'habillage (16) est plusieurs fois inférieure à la largeur B1 de la première partie d'habillage (14).

6. Dispositif d'habillage (1) selon l'une quelconque des revendications précédentes, **caractérisé en ce que** dans la première position fonctionnelle, la première partie d'habillage (14) s'étend parallèlement au côté inférieur du longeron (2), et la deuxième partie d'habillage (16) est maintenue pivotée à partir du bord inférieur de la première partie d'habillage (14) dans une position approximativement verticale vers le haut dans la direction z.

7. Dispositif d'habillage (1) selon la revendication 1, **caractérisé en ce que** la commande à levier secondaire (28) comprend un deuxième levier (38), celui-ci étant relié par sa première zone d'extrémité (40) à la deuxième zone d'extrémité (36) du bras oscillant (30) par l'intermédiaire d'une troisième articulation tournante (42) et étant relié au moyen de sa deuxième zone d'extrémité (44) à la deuxième partie d'habillage (16) par l'intermédiaire d'une quatrième articulation tournante (46).

8. Procédé de déplacement à commande forcée d'un dispositif d'acheminement d'air (12) selon l'une quelconque des revendications 1 à 7, **caractérisé en ce que**, lors d'un mouvement de réglage de la première position fonctionnelle à la deuxième position fonctionnelle, la première partie d'habillage (14) est pivotée vers l'extérieur et vers le bas au moyen de la commande à levier primaire (26) et, lors de ce mouvement de réglage, une rotation de la deuxième partie d'habillage (16) autour d'un axe de pivotement S3 est simultanément provoquée par l'intermédiaire de la commande à levier secondaire (28), de telle sorte que la deuxième partie de l'habillage est orientée à partir de la position dirigée vers le haut dans la direction z vers une position dirigée vers le bas dans la direction z.
